# DEMANDE DE BREVET EUROPEEN

(11) **EP 1 000 843 A2**
(43) Date de publication de la demande: **17.05.2000**
(21) Numéro de dépôt: 99402797.7
(22) Date de dépôt: 10.11.1999
(51) Int. Cl.: B62H 5/00, B62J 11/00

(54) **Dispositif de fixation perfectionné pour élément antivol de bicyclette, de motocyclettes et analogues**

(30) Priorité: 12.11.1998 ES 9802371
(71) Demandeur: Luma Industrias, S.A., 20120 Hernani (Guipuzcoa) (ES)
(72) Inventeur: Urbano, Arrizabalaga Zulaica, 20004 San sebastian (Guipuzcoa) (ES)
(74) Mandataire: Thévenet, Jean-Bruno

(57) **Abrégé**

Dispositif de fixation perfectionné pour élément antivol de bicyclettes, motocyclettes et analogues, dans lequel le corps de blocage (3) de l'antivol possède une cavité (5) dans laquelle, avec un seul mouvement de trajectoire rectiligne, pénètre frontalement un ancrage (6) doté de trois lames (7, 8) planes et parallèles parmi lesquelles les deux lames latérales (8) présentent un jeu élastique potentiel (9) et possèdent chacune des renflements (10) en opposition, qui sont susceptibles de s'accrocher dans la cavité (5) du corps de blocage (3) et de rester en regard des bords mobiles (14) de poussoirs externes (15) respectifs.

## Description

### DOMAINE DE L'INVENTION

Le dispositif objet de l'invention est particulièrement conçu pour fixer, au cadre du véhicule, et pendant les périodes de marche de celui-ci, un élément antivol du type de ceux qui sont formés d'une boucle résistante et souple dont une des extrémités est liée de façon inséparable à un corps de blocage et l'autre extrémité peut être bloquée dans le sein de ce corps de blocage à l'aide d'un mécanisme de fermeture pouvant être actionné par l'intermédiaire d'une clé de serrure.

### ETAT DE LA TECHNIQUE ANTERIEURE

Fondamentalement, il existe deux types classiques d'éléments antivol pour bicyclettes et véhicules analogues : ceux qui s'assimilent au cadenas typique et qui consistent en une longue partie en forme de fourche faite de fer dont les extrémités s'ancrent de manière pratique sur un corps qui incorpore un mécanisme de fermeture pouvant être actionné avec une clé de serrure ; et ceux qui, comme le présent dispositif, consistent en une boucle souple réalisée en câble d'acier et qui se ferment sur un corps de blocage, pareillement dotés d'un mécanisme de fermeture avec clé de serrure.

Quel que soit le type d'antivol que l'on considère (boucle souple ou fourche), les dispositifs de fixation au cadre du véhicule se classent dans l'un ou l'autre de deux grands groupes : les dispositifs de fixation qui s'incorporent fonctionnellement au système de fermeture proprement dit de l'élément antivol ; et les dispositifs de fixation qui sont, au contraire, fonctionnellement indépendants du système de fermeture proprement dit de l'élément antivol.

L'exemple le plus élémentaire du premier cas (dépendance fonctionnelle) est celui dans lequel on fait passer la boucle souple ou l'une des branches de la fourche (selon le type d'antivol) par un orifice d'un support solidaire du cadre du véhicule avant de procéder au blocage de cette boucle souple ou de cette fourche dans son corps de blocage.

Un exemple connu se rapportant au deuxième cas est celui décrit dans le brevet des Etats-Unis d'Amérique n° 4 736 921, où les moyens de fixation au cadre du véhicule sont indépendants des moyens de fermeture proprement dits de l'antivol. Fondamentalement, il consiste en une double bride formée par deux alvéoles tubulaires jumelles ; dans l'une d'elles, est réalisée la fixation au cadre du véhicule, et dans l'autre, on saisit le corps de blocage d'un antivol du type fourche rigide, cette deuxième alvéole tubulaire disposant d'un mécanisme d'ouverture rapide par levier excentrique.

En effet, avec cette solution, il apparaît que les moyens de fixation sont réalisés en toute indépendance fonctionnelle vis-à-vis du système de fermeture proprement dit de l'antivol, puisque, pour retirer l'antivol, il n'est pas nécessaire de l'ouvrir préalablement, comme cela se produirait, au contraire, dans l'exemple cité ci-dessus d'un support doté d'un orifice de passage pour la branche de la fourche ou la boucle souple. Avec cette solution également, on voit que les moyens de fixation placent un élément d'ancrage dans l'antivol, qui est constitué par le corps de blocage proprement dit de l'antivol, et un élément de fermeture ou de blocage qui est en relation avec cet ancrage et qui est constitué par la double bride et par son levier d'ouverture rapide associé à l'alvéole de la bride destinée à recevoir ledit élément d'ancrage.

Une autre solution (cas de l'indépendance fonctionnelle), qui est équivalente à celle-ci et est connue dans son application particulière au type de la boucle souple, consiste à doter le corps de blocage d'une partie saillante qui, par glissement longitudinal, s'accouple de manière pratique dans une partie de coulissement qui est fixée au cadre du véhicule ; l'accouplement ainsi réalisable s'effectue du fait que, dans une cavité de la partie saillante, se trouve, en travers de la paroi de la partie de coulissement, un téton disposé au centre d'un ressort longitudinal recourbé qui, lorsqu'il est mis en pression par ses extrémités, assure l'inhibition dudit téton.

Dans le cas de ces deux exemples (l'un relatif à la fourche rigide et l'autre à la boucle souple) se rapportant au groupe des dispositifs de fixation qui sont fonctionnellement indépendants du système de fermeture de l'antivol, il faut réaliser une manoeuvre en deux mouvements qui suivent une trajectoire en lignes brisées perpendiculaires. Dans le premier mouvement, on effectue un prépositionnement ou un rapprochement pour pouvoir effectuer (perpendiculairement au premier mouvement) le deuxième mouvement, lequel donne lieu à l'accrochage. Dans l'exemple de l'antivol à fourche rigide, le premier mouvement implique de déplacer le corps de blocage de la fourche jusqu'à le placer dans le prolongement axial de l'alvéole correspondante de la double bride ; alors, on peut effectuer, perpendiculairement, le deuxième mouvement, qui, par glissement, accouple ledit corps de blocage dans le sein de ladite alvéole. Dans l'exemple de l'antivol à boucle souple, le premier mouvement vise à placer en alignement ladite partie saillante et ladite partie de coulissement ; lors du deuxième mouvement, perpendiculaire au premier, se produit le glissement qui, à la manière d'un accouplement en queue d'aronde conduit la partie saillante à s'assembler dans la partie de coulissement.

Un premier inconvénient de ces deux solutions est que la manoeuvre ainsi décrite de deux mouvements perpendiculaires demande de pouvoir disposer de place, ce qui limite les possibilités d'application ergonomique dans des recoins du cadre qui se révéleraient appropriés pour des raisons de bon sens ou parce qu'ils seraient alors là où ils gêneraient le moins.

Un autre inconvénient, qui vaut aussi pour les deux cas, est que les moyens de libération (levier excentrique d'ouverture rapide et ressort recourbé) sont incorporés dans la partie du dispositif de fixation qui est fixée au cadre du véhicule ; de ce fait, pour retirer l'antivol, il est nécessaire d'utiliser les deux mains, une pour actionner le mécanisme libérateur et l'autre pour tirer sur l'antivol en réalisant la manoeuvre en lignes brisées perpendiculaires inverse de celle de la mise en place ; ceci donne donc lieu à des manipulations difficiles et malcommodes, principalement si l'on considère les endroits d'accès difficile qui sont fréquemment choisis pour placer l'antivol sur le cadre du véhicule.

Un autre inconvénient, qui se rapporte plus particulièrement à la solution de la boucle souple, est que, du fait que la partie saillante que l'on fait coulisser est formée dans le corps de blocage (lequel incorpore aussi le mécanisme de fermeture avec clé), si cette partie saillante est détériorée et n'accomplit plus sa fonction, le corps de blocage dans son ensemble se révélera inutilisable et, par extension, le dispositif antivol lui-même.

### DESCRIPTION DE L'INVENTION ET DE SES AVANTAGES

Le dispositif de fixation faisant l'objet de la présente invention répond à un concept nouveau selon lequel ledit corps de blocage possède une cavité dans laquelle, par le moyen d'une manoeuvre simple, faite d'un seul mouvement qui décrit une trajectoire en une seule partie rectiligne, un ancrage pénètre frontalement, cet ancrage étant doté de trois lames planes et parallèles formées d'une lame centrale rigide et de deux lames latérales qui sont séparées de la lame centrale par un jeu élastique potentiel et qui, à leur pointe et vers l'extérieur, forment chacune des renflements placés en opposition, lesquels renflements sont déterminés par un pan coupé avant se rattachant à un flanc intermédiaire qui se prolonge vers l'arrière parallèlement à la lame latérale proprement dite jusqu'à atteindre un épaulement postérieur transversal, la cavité possédant une paroi formée de bords opposés mobiles qui appartiennent à des poussoirs externes respectifs et qui, suivant ladite trajectoire rectiligne d'insertion frontale, présentent un profil qui est l'inverse de celui que définissent conjointement ledit pan coupé et ledit flanc intermédiaire, lesdits profils inverses restant mutuellement accolés pendant, respectivement, l'état non poussé desdits poussoirs et l'état détendu desdites lames latérales élastiques, tandis que, dans ladite cavité, il existe aussi une paroi formée de bords fixes opposés qui, dans ledit état détendu des lames élastiques, sont situés précisément à l'arrière desdits épaulements postérieurs, ces épaulements postérieurs dépassant latéralement de leur lame élastique dans une mesure sensiblement moindre que ledit jeu élastique des lames élastiques et que la course possible de rapprochement mutuel desdits bords mobiles, l'ancrage possédant des parties saillantes postérieures qui établissent la limite de pénétration de celui-ci dans ledit corps de blocage.

Par rapport à l'état de la technique connu, ce nouveau dispositif présente des avantages notables. D'un côté, il demande une place disponible minimale aussitôt qu'il existe la place strictement nécessaire pour le positionnement correct du corps de blocage, puisque celui-ci s'accroche dans l'ancrage au prix d'un unique mouvement frontal par rapport à l'ancrage fixé dans le cadre du véhicule.

Ceci facilite son placement en un plus grand nombre d'endroits possibles, plus naturellement accessible et d'une moindre gêne, ainsi qu'une meilleure ergonomie.

La simplicité intrinsèque de la manoeuvre de fixation est en elle-même un avantage significatif. De même, la manoeuvre de libération de l'antivol est plus commode et plus simple, puisque, maintenant, le mécanisme de libération est incorporé dans le corps de blocage proprement dit et qu'il est possible, facile et ergonomiquement positif d'effectuer la libération en même temps qu'on tire sur le corps de blocage pour le séparer de l'ancrage.

Un autre avantage important est que, maintenant, l'ancrage est extérieur au corps de blocage et que son éventuelle détérioration n'affecte pas ce dernier, si bien qu'on peut procéder à son remplacement au meilleur coût.

Ces particularités et avantages de l'invention, ainsi que d'autres particularités et avantages, découleront de la description détaillée suivante, faite en liaison avec les dessins annexés.

### DESSINS ET REFERENCES

Pour permettre une meilleure compréhension de la nature de la présente invention, on a représenté, sur les dessins annexés, une forme préférée de réalisation industrielle, laquelle possède le caractère d'un simple exemple illustratif, n'impliquant aucune limitation de l'invention.
La figure 1 monte le dispositif suivant l'invention, où le corps de blocage (3) est approché d'un ancrage (6) qui est solidaire du collier (18), ainsi qu'une vue partiellement agrandie de l'ancrage (6).
La figure 2 est une vue en plan de dessus de la figure 1.
La figure 3 est une vue partielle d'un collier (18) tel que représenté sur la figure 2 et doté d'un ancrage (6) qui lui est relié de façon articulée.
La figure 4 est analogue à la figure 1 et montre l'ancrage (6) au début de son insertion dans le corps de blocage (3), celui-ci étant présenté en coupe transversale sous forme simplifiée.
La figure 5 est analogue à la figure 4 et montre l'accrochage de l'ancrage (6) dans le corps de blocage (3).
La figure 6 est analogue aux figures 4 et 5 et illustre le début de la manoeuvre de décrochage par actionnement des poussoirs (15).
La figure 7 est analogue aux figures 4 à 6 et montre le commencement de la séparation du corps de blocage (3) vis-à-vis de l'ancrage (6).
Les figures 8, 9 et 10 sont respectivement des vues agrandies des détails VIII, IX et X que l'on peut voir, entourés d'un cercle, sur les figures 5, 6 et 7.

Sur ces figures, sont portées les références suivantes.
1. - Cadre du véhicule
2. - Boucle souple
3. - Corps de blocage
4. - Clé de serrure
5. - Cavité du corps (3)
6. - Ancrage
7. - Lame centrale de l'ancrage (6)
8. - Lames latérales élastiques de l'ancrage (6)
9. - Jeu élastique potentiel
10. - Renflements des lames élastiques (8)
11. - Pan coupé antérieur des renflements (10)
12. - Flanc intermédiaire des renflements (10)
13. - Epaulement postérieur des renflements (10)
14. - Bords mobiles des poussoirs (15)
15. - Poussoirs
16. - Bords fixes de la cavité (5)
17. - Parties saillantes postérieures de l'ancrage (6)
18. - Collier

### DESCRIPTION D'UN MODE DE REALISATION PREFERE

En liaison avec les dessins et les références énumérées ci-dessus, est illustré sur les dessins annexés un mode de réalisation préféré d'un nouveau dispositif de fixation pour antivol de bicyclettes, de motocyclettes et de véhicules analogues, en particulier pour la fixation, au cadre (1) du véhicule et pendant les périodes de marche de celui-ci, d'un élément antivol du type de ceux qui sont formés d'une boucle (2) résistante et souple dont l'une des extrémités est unie de façon inséparable à un corps de blocage (3), l'autre extrémité pouvant être bloquée dans le sein du corps de blocage (3) à l'aide d'un mécanisme de fermeture pouvant être actionné au moyen d'une clé de serrure (4).

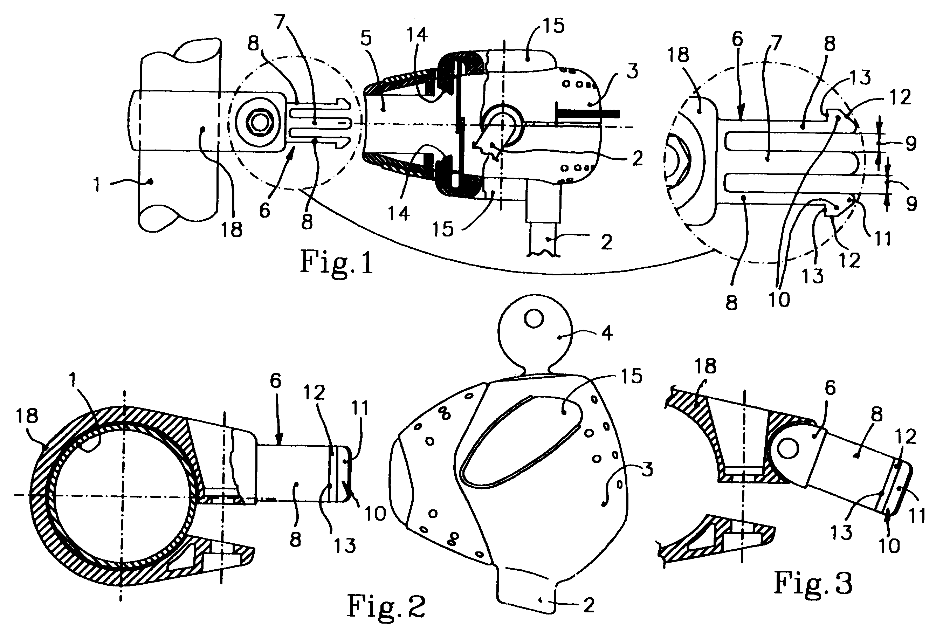

Selon l'invention, ledit corps de blocage (3) possède (figures 1 et 2) une cavité (5) dans laquelle, au moyen d'une manoeuvre simple constituée d'un unique mouvement décrivant une trajectoire en un seul tronçon rectiligne, pénètre frontalement un ancrage (6) doté de trois lames (7, 8) planes et parallèles, formées respectivement d'une lame centrale (7) rigide et de deux lames latérales (8) qui sont séparées de la lame centrale (7) par un jeu élastique potentiel (9) et qui, à leur pointe et vers l'extérieur, forment chacune des renflements (10) en opposition, lesquels sont définis par un pan coupé antérieur (11) se rattachant à un flanc intermédiaire (12) qui s'étend en arrière parallèlement à la lame latérale (8) elle-même jusqu'à atteindre un épaulement transversal postérieur (13), la cavité possédant une paroi formée de bords mobiles opposés (14) qui appartiennent à des poussoirs externes (15) respectifs et qui, suivant ladite trajectoire rectiligne d'insertion frontale, présentent un profil qui est l'inverse de celui que définissent de façon conjointe ledit pan coupé antérieur (11) et ledit flanc intermédiaire (12), lesdits profils inverses restant mutuellement accolés pendant, respectivement, l'état de non-poussée desdits poussoirs (15) et l'état détendu desdites lames latérales élastiques (8), tandis qu'il existe aussi, dans ladite cavité (5), une paroi formée de bords fixes (16) opposés qui, dans ledit état détendu des lames élastiques (8), sont situés exactement derrière lesdits épaulements postérieurs (13), ces épaulements postérieurs (13) dépassant latéralement de leur lame élastique (8) dans une mesure sensiblement moindre que ledit jeu élastique (9) des lames élastiques (8) et que la course possible de rapprochement mutuel desdits bords mobiles (14), l'ancrage (6) possédant des parties saillantes postérieures (17) qui établissent la limite de pénétration de celui-ci dans ledit corps de blocage (3).

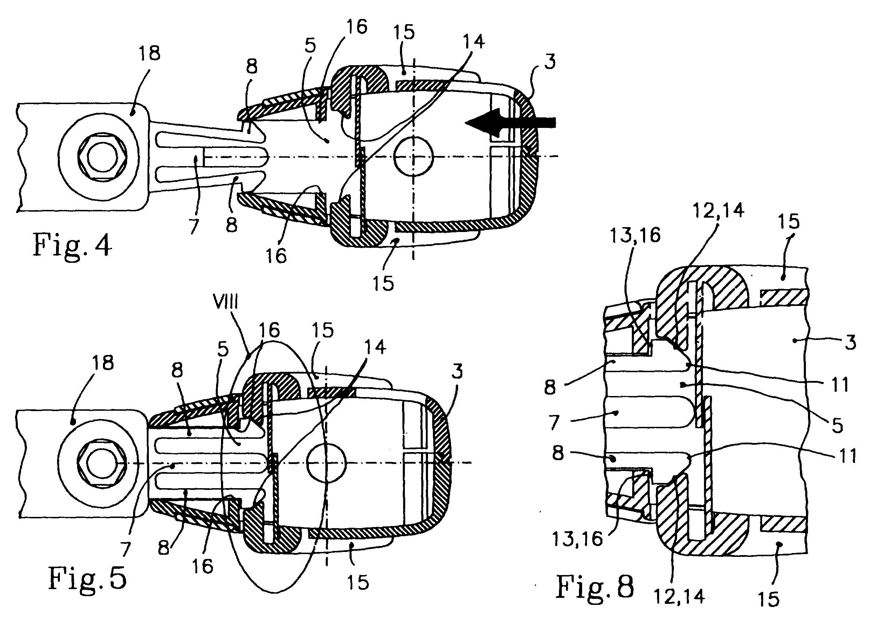

Les figures 4 et 5 montrent clairement la manière simple et avantageuse suivant laquelle, d'un seul mouvement rectiligne et frontal, on amène le corps de blocage contre l'ancrage (6) en faisant que celui-ci fléchisse élastiquement ses lames latérales (8) et pénètre dans la cavité (5) jusqu'à ce que, au fond de celle-ci, les renflements (10) restent accouplés aux bords mobiles (14) et fixes (16) d'une manière que l'on peut voir en toute clarté sur la figure 8 et qui détermine l'accrochage voulu de l'ancrage (6) dans le sein du corps de blocage (3); la flexion initiale des lames latérales (8) (figure 4) est facilitée par l'effet de plan incliné s'exerçant entre le pan coupé antérieur (11) et l'orifice de la cavité (5).

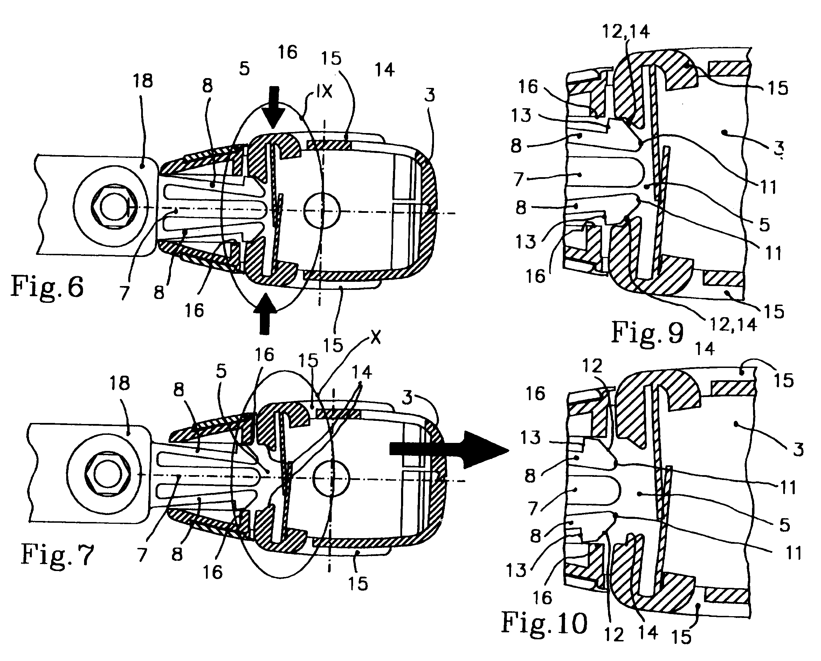

La manoeuvre de décrochage est elle aussi extrêmement simple (figures 6, 7, 9 et 10) et donne l'avantage appréciable de pouvoir être réalisée d'une seule main. En prenant le corps de blocage (3) entre le pouce et l'index de la main, on appuie sur les poussoirs (15) (figures 6 et 9) et, par l'action des bords mobiles (14) sur le flanc intermédiaire (12), les épaulements antérieurs (13) sortent de leur position d'accrochage dans les bords fixes (16), de sorte que, en exerçant une légère traction sur le corps de blocage (3) (figures 7 et 10), on entraîne la séparation de celui-ci.

Pour assurer une meilleure fiabilité de la manoeuvre présentée sur les figures 6 et 9, celle-ci s'effectue indépendamment d'éventuelles imprécisions de construction ou de montage des pièces, en accord avec une autre caractéristique de l'invention, où ledit flanc intermédiaire (12) a un profil convexe dans la direction de la largeur de la lame élastique (8) ou de la longueur dudit bord mobile (14).

Une version de l'invention envisage que l'ancrage (6) soit relié à un collier (18) d'ouverture de façon rigide par rapport à une partie dudit cadre (1) du véhicule. C'est la version qui est représentée principalement sur les dessins annexés.

Une autre version se rapportant à ce point est celle (figure 3) dans laquelle ledit ancrage (6) est réuni de manière articulée à un dit collier (18). Dans le contexte de cette version, est également envisagée la variante sur laquelle l'axe d'articulation de l'ancrage (6) est perpendiculaire à la représentation de ladite figure 3.

Il est également possible qu'un ancrage (6) tel que représenté sur la figure 3 soit employé indépendamment du collier (18) et qu'il suffise pour celui-ci que la fixation se réalise par l'intermédiaire de l'orifice prévu pour l'axe d'articulation, lequel peut être traversé et fixé par une vis quelconque.

Alors que la nature de la présente invention a été décrite de manière suffisante, ainsi que sa réalisation industrielle, on peut simplement ajouter que, dans son ensemble et ses parties constitutives, il est possible d'introduire des changements de forme, de matière et de disposition, tout en restant dans les limites de l'invention, dans la mesure où de telles altérations ne dénaturent pas ses principes fondamentaux.

## Revendications

1. Dispositif de fixation perfectionné pour élément antivol de bicyclettes, motocyclettes et analogues, en particulier pour la fixation au cadre (1) du véhicule, pendant les périodes de marche de celui-ci, d'un élément antivol du type de ceux qui sont formés d'une boucle (2) résistante et souple dont une des extrémités est réunie de façon inséparable à un corps de blocage (3) et l'autre extrémité peut être bloquée dans le sein de ce corps de blocage (3) à l'aide d'un mécanisme de fermeture actionnable au moyen d'une clé de serrure (4), caractérisé en ce que ledit corps de blocage (3) possède une cavité (5) dans laquelle, au moyen d'une manoeuvre simple constituée d'un seul mouvement qui décrit une trajectoire ayant un unique tronçon rectiligne, pénètre frontalement un ancrage (6) doté de trois lames (7, 8) planes et parallèles, formées d'une lame centrale (7) rigide et de deux lames latérales (8) qui sont séparées de cette lame centrale (7) par un jeu élastique potentiel (9) et qui, à leur pointe et vers l'extérieur, forment chacune des renflements (10) en opposition qui sont définies par un pan coupé antérieur (11) se rattachant à un flanc intermédiaire (12) qui s'étend en arrière parallèlement à la lame latérale elle-même (8) jusqu'à atteindre un épaulement transversal postérieur (13), ladite cavité possédant une paroi formée de bords mobiles opposés (14) qui appartiennent à des poussoirs externes (15) respectifs et qui, suivant ladite trajectoire rectiligne d'insertion frontale, présentent un profil qui est l'inverse de celui que définissent ensemble ledit pan coupé antérieur (11) et ledit flanc intermédiaire (12), lesdits profils inverses restant mutuellement accolés pendant, respectivement, l'état de non-poussée desdits poussoirs (15) et l'état détendu desdites lames latérales élastiques (8), tandis que, dans ladite cavité (5), existe également une paroi formée de bords fixes opposés (16) qui, dans ledit état détendu des lames élastiques (8), sont situés exactement à l'arrière desdits épaulements postérieurs (13), lesquels épaulements postérieurs (13) dépassent latéralement de leur lame élastique (8) dans une mesure sensiblement moindre que ledit jeu élastique (9) des lames élastiques (8) et que la course possible de rapprochement mutuel desdits bords mobiles (14), ledit ancrage (6) possédant des parties saillantes postérieures (17) qui établissent la limite de pénétration de celui-ci dans ledit corps de blocage (3).

2. Dispositif de fixation perfectionné pour élément antivol de bicyclettes, de motocyclettes et analogues, selon la revendication 1, caractérisé en ce que ledit flanc intermédiaire (12) possède un profil convexe dans la direction de la largeur de la lame élastique (8), ou de la longueur dudit bord mobile (14).

3. Dispositif de fixation perfectionné pour élément antivol de bicyclettes, de motocyclettes et analogues, selon les revendications précédentes, caractérisé en ce que ledit ancrage (6) est relié à un collier (18) d'ouverture de façon rigide par rapport à une partie dudit cadre (1) du véhicule.

4. Dispositif de fixation perfectionné pour élément antivol de bicyclettes, de motocyclettes et analogues, selon les revendications précédentes, caractérisé en ce que ledit ancrage (6) est relié de manière articulée à un dit collier (18).
